Europäisches Patentamt

European Patent Office

Office européen des brevets

(11) Veröffentlichungsnummer : **0 339 528 B1**

(19)

(12) **EUROPÄISCHE PATENTSCHRIFT**

(45) Veröffentlichungstag der Patentschrift :
**11.03.92 Patentblatt 92/11**

(21) Anmeldenummer : **89107305.8**

(22) Anmeldetag : **22.04.89**

(51) Int. Cl.⁵ : **F16K 31/00, F16K 7/12,**
**F15C 3/04, F15C 3/08**

(54) **Ventilanordnung aus mikrostrukturierten Komponenten.**

(30) Priorität : **27.04.88 DE 3814150**

(43) Veröffentlichungstag der Anmeldung :
**02.11.89 Patentblatt 89/44**

(45) Bekanntmachung des Hinweises auf die
Patenterteilung :
**11.03.92 Patentblatt 92/11**

(84) Benannte Vertragsstaaten :
**DE FR GB IT SE**

(56) Entgegenhaltungen :
**EP-A- 0 160 463**
**EP-A- 0 208 386**
**WO-A-87/07217**
**WO-A-87/07218**
**DE-A- 3 342 844**
**DE-A- 3 445 720**
**DE-A- 3 618 380**
**DE-A- 3 635 216**
**GB-A- 2 155 152**
**US-A- 4 203 128**
**US-A- 4 628 576**

(56) Entgegenhaltungen :
**MICROELECTRONIC ENGINEERING, Band 4,**
**Nr. 1, Mai 1986, Elsevier Science Publishers**
**B.V. (North-Holland) BECKER, EHRFELD,**
**HAGMANN, MANER, MüNCHMEYER**
**"Fabrication of microstructures with high**
**aspect ratios and great structural heights by**
**synchrotron radiation lithography, galvanofor-**
**ming, and plastic moulding (LIGA process)"**
**Seiten 35-56**
**TECHNISCHE RUNDSCHAU, Nr. 43, 14. Okto-**
**ber 1986 W. ROTTINI "Fluidics, eine neue**
**Steuerungstechnik" Seiten 9,11**

(73) Patentinhaber : **Drägerwerk**
**Aktiengesellschaft**
**Moislinger Allee 53-55**
**W-2400 Lübeck 1 (DE)**

(72) Erfinder : **Albarda, Scato, Dipl.-Ing.**
**Am Kannenbruch 11**
**W-2061 Gross Schenkenberg (DE)**
Erfinder : **Kähning, Stefan, Dipl.-Ing.**
**Heckkaten 5**
**W-2074 Steinburg 1 (DE)**
Erfinder : **Thoren, Werner, Dr. Dipl.-Phys.**
**Gertrudenstrasse 1a**
**W-2400 Lübeck (DE)**
Erfinder : **Vehrens, Peter, Dipl.-Ing.**
**In der Ecke 3a**
**W-2061 Sülfeld (DE)**

EP 0 339 528 B1

## Beschreibung

Die Erfindung betrifft eine Ventilanordnung nach dem Oberbegriff des Anspruchs 1.

Derartige mikrostrukturierte Ventile sind in der EP-A1 208 386 beschrieben. Bei der bekannten Ventilanordnung ist ein Strömungswegverteiler in Form einer im wesentlichen ebenen Siliziumscheibe gebildet, welcher geeignete Erhebungen und Fluidwege mit entsprechenden Öffnungen aufweist, die durch eine bewegbare Membran als Betätigungselement geöffnet oder geschlossen werden können. Die als Betätigungselement dienende Membran ist mit einem piezoelektrischen Material versehen, wodurch sie durch Anlegen einer Spannung in ihrer Lage verschoben werden kann. Um einen der Fluidwege zu öffnen, muß die piezoelektrische Membran entgegen einer in Schließrichtung wirkenden Feder angehoben werden. Die durch die Längenänderung im piezoelektrischen Material hervorgerufene Ausdehnung bringt diese notwendige Öffnungskraft auf, wobei während des Überführens von der geschlossenen in die geöffnete Position Energie verbraucht wird. In geöffneter Stellung braucht lediglich die Spannung an der piezoelektrischen Membran aufrechterhalten zu werden, um sie im geöffneten Zustand zu halten. Der Stellantrieb dient dann als Haltevorrichtung und braucht dann keine Energie außer den geringfügigen Haltestrom aufzubringen. Soll der Fluidweg wieder geschlossen werden, genügt es, die Haltespannung abzuschalten, so daß die Membran der Federkraft folgend in die Schließstellung zurückgebracht wird.

Bei der bekannten Ventilanordnung ist es von Nachteil, daß der angegebene piezoelktrische Stellantrieb zwar hohe Kräfte überwinden bzw. halten kann, die Stellwege hingegen nur in begrenzten Abmessungen durchgeführt werden können, oder umgekehrt. Da Längenänderungen mit Hilfe von piezoelektrischer Keramik bei gleichzeitig hoher Kraftentwicklung nur im Promillebereich erzeugt werden können, müßte, um größere Wege zurücklegen zu können, eine Wegverlängerung beispielsweise durch Hebelübertragung verwirklicht werden. Dadurch würde aber in gleichem Maße die übertragbare Kraft vermindert sein. Hohe Fluidströme bei entsprechend hohem Druck können daher mit der bekannten Ventilanordnung nicht geschaltet werden.

Der vorliegenden Erfindung liegt somit die Aufgabe zugrunde, eine Ventilanordnung der genannten Art so zu verbessern, daß auch bei großen Ventilhüben, die einen hohen Fluidstrom ermöglichen, trotzdem eine große Krafteinwirkung auf das Betätigungselement ausgeübt werden kann.

Die Lösung der Aufgabe erfolgt mit den in den Ansprüchen 1 bis 5 gekennzeichneten Merkmalen.

Der Vorteil der Erfindung liegt im wesentlichen darin, daß der Stellantrieb für das Betätigungselement hinsichtlich der Zurücklegung von langen Wegen optimiert werden kann, wobei die Haltevorrichtung so ausgelegt ist, daß sie großen Kräften gegenüber hohen Fluiddrücken standhalten kann.

Derartige mikrostrukturierte Ventilanordnungen können auf verschiedene Herstellungsarten erzeugt werden: eine bekannte Art ist das Ätzen der Struktur aus einem Silizium-Grundkörper heraus; ein anderes bekanntes Verfahren besteht darin, mit Hilfe der Röntgenlithographie, der Galvanoformung und der Abformung Mikrostrukturen zu schaffen: Dieses Verfahren ist unter der Abkürzung LIGA-Verfahren bekannt (LIGA: Lithographie, Galvanoformung, Abformtechnik).
(Veröffentlicht in: Microelectronic Engineering 4, 1986 (35-56)).

Eine besondere zweckmäßige Ausführungsform wird dadurch hergestellt, daß der Strömungswegverteiler aus einem Siliziumgrundkörper geätzt ist und Kanalführungen aufweist, von welcher zumindest eine ihrer Kanalmündungen durch einen als Betätigungselement ausgebildeten Verschlußkörper verschließbar ist. Eine derartige Ausführungsform läßt viele Möglichkeiten der Gestaltung und Ausbildung der einzelne Bauelemente zu und erlaubt die Anwendung einer Vielzahl von Ausführungsformen für Stellantrieb und Haltevorrichtung.

Vorzugsweise ist der Verschlußkörper eine im Grundkörper allseitig eingespannte Membran, welche an solchen Bereichen Durchbrüche aufweist, die infolge von Hubbewegungen spannungsrißgefährdet sind. Bei einer rechteckigen Membran sind dies ihre Eckbereiche.

Statt einer allseitig eingespannten Membran kann eine einseitig eingespannte Zunge vorgesehen sein, da bei dieser freischwingenden Anordnung das Problem der durch Spannungsrisse gefährdeten Bereiche nicht auftritt.

Zur Stabilisierung seines die Kanalmündung überdeckenden Bereichs weist der Verschlußkörper dort eine Verdickung auf.

Vorteilhafterweise kann der Stellantrieb aus einer Auflage aus piezoelektrischem Material bestehen, welche auf dem Verschlußkörper aufgebracht und an eine elektrische Energiequelle anschließbar ist. Die Selbsthaltevorrichtung kann dann als eine Kondensatorhalterung ausgebildet sein. Durch Anlegen einer elektrischen Spannung wird durch Ladungstransport in die piezoelektrische Auflage die Membran in Richtung der Kanalmündung verbogen und verschließt diese. An der Membran ist eine Schicht aus elektrisch leitfähigem Material aufgebracht, an die bei verschlossener Kanalmündung eine Spannung gegenüber dem leitfähigen Grundkörper aus Silizium angelegt wird, durch die die Membran auf der Kanalöffnung festgehalten ist. Der Stellantrieb kann danach abgeschaltet werden.

Um eine genügende Haltekraft zu erzeugen, reicht bei den Abständen, die bei mikrostrukturierten Ventilanordnungen überbrückt werden müssen, eine Spannungsdifferenz von 1 Volt bis 30 V an den Kondensatorplatten aus. Dies sind übliche, für die Mikroelektronik notwendige Bereiche für die Spannungsversorgung.

Eine weitere günstige Ausbildung besteht darin, den Strömungswegverteiler und die zugehörigen Fluidwege durch eine Membran zu überdecken, welche eine dünnschichtige, beispielsweise spiralförmig gewundene Leiterbahn trägt, die auf einer der Membranflächen in der Nähe der zu verschließenden Kanalmündung aufgebracht ist. Der Bereich der Leiterbahn wird einem Magnetfeld ausgesetzt, welches einen divergierenden Kraftlinienverlauf zeigt. Wird durch die Leiterbahn ein Strom geschickt, bildet sich infolge des Ringstromes ein magnetischer Dipol aus, der je nach seiner Stellung zum Magnetfeld in die Kraftlinien hineingezogen oder aus ihnen hinausgedrängt wird; die Stellung des Dipols wird durch die Stromrichtung in der Leiterbahn bestimmt. Durch entsprechende Beschaltung kann durch den Stromrichtungswechsel die Membran auf die Kanalmündung aufgesetzt oder von ihr abgehoben werden.

Das erforderliche Magnetfeld kann z.B. dadurch erzeugt werden, daß zwei Permanentmagnete mit ihren gleichnamigen Polen gegenüberliegend diesseits und jenseits der Membran angeordnet werden. Die Membran wird in der verschlossenen Position durch eine Kondensatorhalterung gehalten, welche durch Anlegen einer elektrischen Spannung an die jeweiligen Kondensatorplatten die Haltekraft erzeugt. Der Strom durch die Leiterbahn kann dann abgeschaltet werden. Derartige Ausführungsformen sind leicht herzustellen, da sowohl der Silizium-Grundkörper, die Membran, die Leiterbahn sowie die Kondensatorplatten sämtlich aus einer mehrschichtigen Lage eines einzigen Grundkörpers in Ätztechnik oder nach dem LIGA-Verfahren herausgearbeitet werden können. Dies ermöglicht eine kompakte und übersichtliche, je nach Erfordernis der Kanalführung verwirklichbare Ausführungsform.

Eine weitere günstige Möglichkeit für eine Ventilanordnung besteht darin, als Stellantrieb eine Heizvorrichtung vorzusehen, die auf der freien Fläche einer freigeätzten Membran aus Silizium als Betätigungselement aufgebracht ist. Die Membran trägt auf ihrer der Kanalmündung zugewandten Fläche einen Verschlußkörper. Die Heizvorrichtung besitzt zwei unterschiedliche Heizbahnen, von denen die eine im Randbereich des Verschlußkörpers verlaufend und die andere im Randbereich der Verbindungsstelle zwischen Membran und Strömungswegverteiler verlaufend angeordnet ist.

Eine aus einem Silizium-Grundkörper freigeätzte Siliziumoxidmembran besitzt die Eigenschaft, daß sie unter einer inneren Druckspannung steht, welche geeignet ist, die Membran in zwei stabile Positionen zu bringen: Es sind dies die Ausbeulungen der Membran in Richtung ihrer beiden Flächen. An den Übergangsstellen zwischen Membran und dem als Membranverdickung ausgebildeten Verschlußkörper einerseits und dem Übergang zwischen Membran und Silizium-Grundkörper andererseits bewirken thermische Veränderungen den Übergang von einer Ausbeulung in die andere, welche beide als stabile Schaltzustände des Betätigungselementes für die Ventilanordnung anzusehen sind und somit als Haltevorrichtung wirken. So kann beispielsweise die Erwärmung des Randbereiches der Membran am Verschlußkörper das Hinüberspringen der Membran von dem geöffneten in den geschlossenen Zustand bewirken, wobei sie in dem geschlossenen Zustand verharrt, auch wenn die entsprechende Heizung abgeschaltet ist. Um den Verschlußkörper wieder zu öffnen, braucht lediglich die im Randbereich zum Siliziumgrundkörper vorgesehene Heizung eingeschaltet zu werden, worauf die Membran in den stabilen Öffnungszustand zurückspringt. Auf diese Weise läßt sich bei einer Membranlänge von etwa 500 Mikrometern ein Gesamthub von etwa 40 Mikrometern erreichen.

In weiterer Ausgestaltung der Erfindung ist vorgesehen, den Stellantrieb in Form von mindestens zwei Schichten unterschiedlicher thermischer Ausdehnungskoeffizienten auszubilden. Die eine der Schichten kann z.B. die als Verschlußkörper wirkende Membran aus beispielsweise Siliziumnitrid, die andere eine zusätzlich auf die Membran aufgebrachte Schicht aus Siliziumoxid sein. Man erhält somit eine Art "Bimetallwirkung" der beiden Schichten, wenn sie durch eine Heizvorrichtung erwärmt werden. Die Haltevorrichtung bildet wieder ein Kondensator.

In gleicher Weise kann statt einer zusätzlichen aufgebrachten Schicht die in mäanderförmig gewundenen Bahnen auf die Membran aufgetragene Heizung als zweite Schicht wirken. Die relativ zu ihrem Abstand langen Stege bewirken durch ihre Ausdehnung infolge des Heizstromes eine Durchbiegung der Membran. Aber auch schon eine homogene Membran alleine kann durch eine einseitige Erwärmung, hervorgerufen durch eine extrem kurzzeitige intensive Beheizung, zu einer bimetallartigen Verformung gebracht werden.

Um die durch die Knickung entstehende Zugkraft noch zu verringern, ist vorgesehen, die Membran aus einem Gemisch von Siliziumoxid und Siliziumnitrid auszubilden.

Um eine Ventilanordnung zu schaffen, bei welcher das Betätigungselement besonders große Wege zurücklegen kann, ist als Betätigungselement ein über die Kanalmündung schwenkbarer und über einen Antrieb betätigbarer Schieber vorgesehen. Zwischen Antrieb und Schieber ist eine Hebelübertragung vorgesehen, die den relativ kleinen Weg des Antriebes in den erforderlich größeren Weg des Schiebers überträgt. Durch die Hebelübertragung ist jedoch die Kraftübertragung gemindert. Deshalb ist zum Verschließen der Kanalmündung eine elektrostatisch wirkende Kondensatorhaltevorrichtung vorgesehen. Dazu ist die Kanalmündung von einem Bereich aus elektrisch leitfähigem Material umgeben und der Schieber selbst ebenfalls aus elektrisch leitfähigem Material gebildet. Sobald der Schieber durch den Antrieb über der Kanalmündung positioniert ist, wird an die Kondensatorplatten eine elektrische Spannung angelegt, so daß der Schieber auf die Kanalmündung aufliegt und diese verschließt. Der Antrieb kann dann ausgeschaltet werden. Zur Betätigung des Hebelwerks erweisen sich ein Piezoantrieb als zweckmäßig, oder ein Stab, der ein Heizelement trägt und durch Erwärmung eine Längenausdehnung erfährt. Gleicherweise ist auch ein Antriebskondensator günstig, dessen eine Kodensatorplatte mit dem Grundkörper und dessen andere Kondensatorplatte mit dem Hebelwerk in fester Verbindung steht. Eine Wegänderung wird durch Anlegen einer Spannung an die sich gegenüberliegenden Platten erzielt.

Ein Ausführungsbeispiel der Erfindung wird anhand der schematischen Zeichnung dargestellt und im folgenden näher erläutert.

Es zeigen

Figur 1 den Schnitt durch eine Ventilanordnung mit einer Membran und einer zusätzlichen Beschichtung,

Figur 2 den Schnitt durch eine weitere Ventilanordnung mit einer Knickmembran,

Figur 3 den Schnitt durch eine Ventilanordnung mit einer Membran und einem Piezoantrieb,

Figur 4 den Schnitt durch eine Ventilanordnung mit spiralförmigen Stromleiterbahnen, die einem Magnetfeld ausgesetzt sind,

Figur 5 die Aufsicht auf eine Ventilanordnung mit schwenkbarem Schieber.

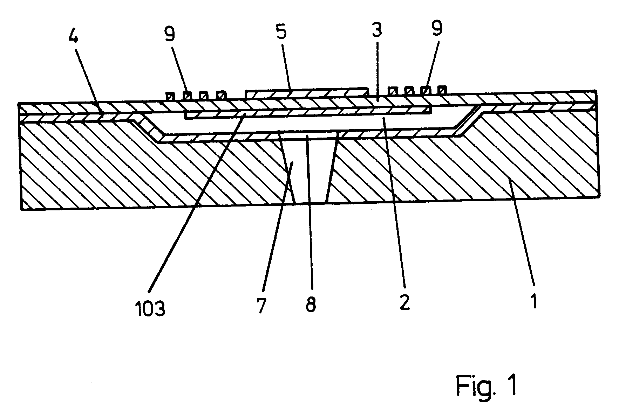

In Figur 1 ist eine Ventilanordnung mit mikrostrukturierten, aus Silizium geätzten Komponenten gezeigt, welche einen Grundkörper (1) als Strömungswegverteiler besitzt, aus dem eine Kanalführung (2,7) herausgeätzt ist, die mit ihrer Kanalmündung (8) von einer Membran (3) als Betätigungselement abgedeckt ist. Die Kanalführung (2) ist mit einer Auskleidung (4) versehen, welche beispielsweise aus Siliziumoxid oder Siliziumnitrid besteht. Sie dient als Dielektrikum für zwei Kondensatorplatten (1, 5), von denen die eine (1) aus dem Grundkörper gebildet wird, und die andere (5) als eine Schicht auf der Membran (3) aufgetragen ist. Auf der Membran (3) als einer ersten Schicht ist eine zweite Schicht (103) aufgetragen, die aus einem Material besteht, welches einen anderen thermischen Ausdehnungskoeffizienten besitzt als die Membran (3). Beidseitig neben der Kondensatorplatte (5) ist auf der Membran (3) eine Serie von Heizelementen (9) angeordnet, welche über nicht dargestellte Anschlußkontakte an eine ebenfalls nicht dargestellte Energiequelle anschließbar sind. Für den Kondensator (1, 5) sind ebenfalls Anschlußkontakte für eine Spannungsquelle vorgesehen (nicht dargestellt).

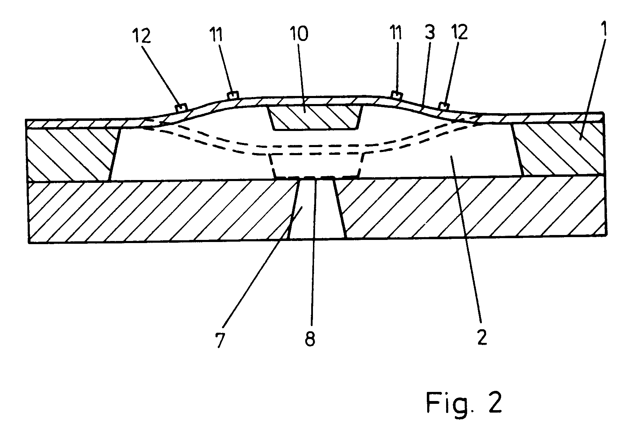

Der in Figur 2 dargestellte Silizium-Grundkörper (1) besitzt eine Membran (3), welche die Kanalführung (2, 7) abdeckt und im Bereich über der Kanalmündung (8) einen Verschlußkörper (10) trägt, welcher in der dargestellten Form durch die nach außen gewölbte Membran (3) von der Mündung (8) abgehoben ist. Auf der der Kanalführung (2) abgewandten Fläche der Membran (3) befinden sich zwei Heizbahnen (11, 12), von denen eine jede getrennt heizbar ist. Die eine Heizbahn (11) ist in der Nähe der Biegezone im Randbereich von Membran (3) und Verschlußkörper (10), die andere Heizbahn (12) ist in der Nähe der Biegezone im Randbereich von Membran (3) und Grundkörper (1) angeordnet. Um die Membran (3) mit ihrem Verschlußkörper (10) in die gestrichelt dargestellte geschlossene Position zu überführen, ist die Heizbahn (11) aufzuheizen, so daß eine Knickspannung erzeugt wird, welche die Membran (3) und somit den Verschlußkörper (10) im Bereich der Kanalführung (2) in Richtung auf die Mündung (8) drückt. Der dann erreichte gestrichelt dargestellte Schließzustand bleibt stabil erhalten, auch wenn die Heizung (11) ausgeschaltet ist. Um die Membran wieder zu öffnen, muß die Heizung (12) eingeschaltet werden, worauf die dadurch erzeugte Knickspannung ein Zurückspringen der Membran (3) über der Kanalführung (2) in die geöffnete stabile Ausgangsposition herbeiführt. Danach kann die Heizung (12) wieder abgeschaltet werden.

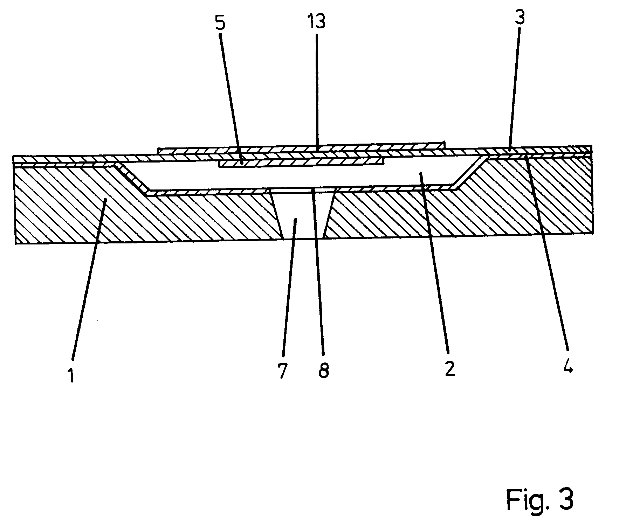

In Figur 3 besitzt die Membran (3) eine piezoelektrische Schicht (13), welche durch Anschluß an eine nicht dargestellte Energiequelle als Piezoantrieb für die Betätigung der Membran (3) dient. Auf der der Kanalführung (2) zugewandten Fläche der Membran (3) befindet sich die Kondensatorplatte (5), die als Gegenstück den Grundkörper (1) besitzt. Zum Betrieb wird an die piezoelektrische Schicht (13) eine Spannung angelegt, welche die Membran (3) im Bereich der Kanalführung (2) auswölbt und in Richtung der Kanalmündung verbiegt. Bei Anliegen der Membran (3) bzw. Kondensatorplatte (5) auf der Kanalmündung (8) wird eine Spannung an den Kondensator (1, 6) angelegt, wodurch die Membran (3) im geschlossenen Zustand gehalten bleibt, auch wenn die Energieversorgung für den Piezoantrieb (13) ausgeschaltet ist.

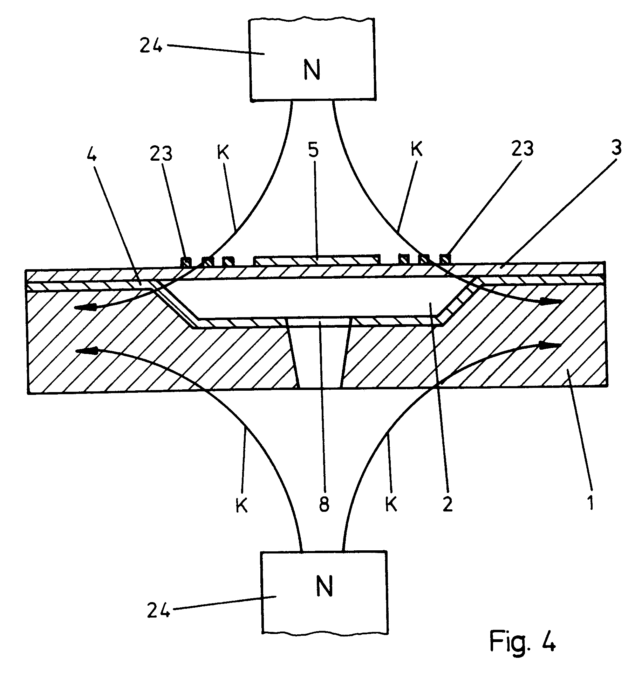

In Figur 4 ist eine Ventilanordnung gezeigt, bei der auf der Membran (3) spiralförmige Stromleiterbahnen (23) aufgetragen sind, welche einem Magnetfeld mit divergierenden Kraftlinien (K) ausgesetzt sind. Das Magnetfeld wird durch die gleichnamigen Pole (N) zweier Permanentmagnete (24) erzeugt, die diesseits und jenseits der Leiterbahnen (23) angeordnet sind.

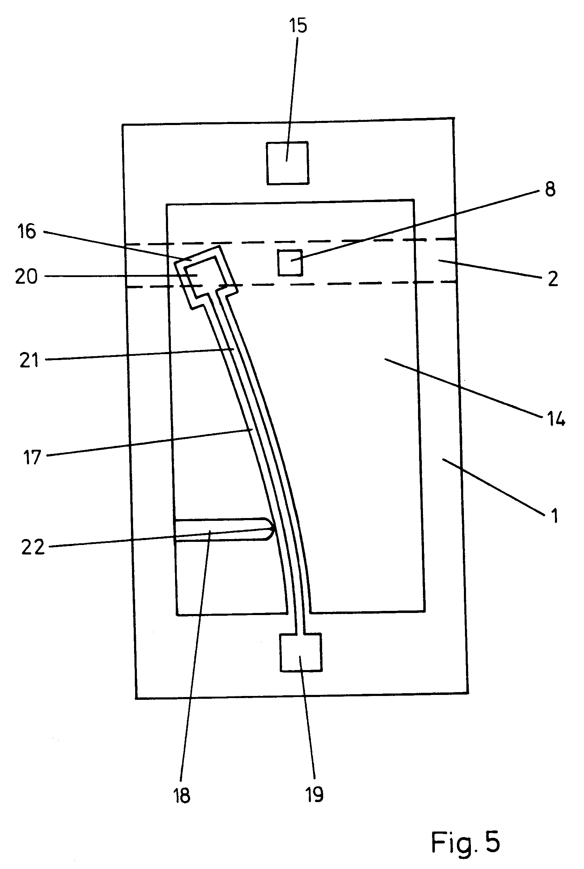

Die in Figur 5 dargestellte Ventilanordnung besitzt ebenfalls einen Grundkörper (1) aus Silizium, in den die Kanalführung (2) (auf der Unterseite des Grundkörpers (1) gestrichelt dargestellt) sowie die Kanalmündung (8) eingelassen sind, welche von der Kanalführung (2) ausgehend durch die Oberfläche des Grundkörpers (1) hindurchdringt. Der leitfähige Grundkörper (1) kann über einen Kontakt (15) mit einer nicht dargestellten Spannungsquelle verbunden werden. Ein Schieber (16) ist mit seinem Arm (17) an einen Längenantrieb (18) aus piezoelektrischem Material verbunden. Der Schieber (16) besteht aus elektrisch isolierendem Material und trägt eine elektrisch leitende Schicht (20), die über eine elektrische Leitungsbahn (21) mit einem Anschlußkontakt (19) verbunden ist. Zur Betätigung der Ventilanordnung wird durch den Längenantrieb (18) der Schieber (16) in die Höhe der Kanalmündung (8) verschoben und in dieser Position gehalten. Sobald er diese erreicht hat, wird eine Spannung an die Kontakte (15, 19) angelegt, so daß der Schieber (16) auf der Kanalmündung (8) festsitzt und diese verschließt. Der Längenantrieb (18) kann dann abgeschaltet werden. Der Arm (17) ist in der dargestellten Form derart gekrümmt ausgebildet, daß im Ruhezustand der Schieber (16) die Kanalmündung (8) freigibt. Der am Arm (17) anliegende Längenantrieb (18) drückt mit seinem abgewendeten Ende (22) in Schaltstellung den Schieber (16) über die Kanalmündung (8).

Längenantrieb (18), Arm (17) mit dazugehörigem Schieber (16), Schicht (20) und Leiterbahn (21) sind aus dem Grundkörper (1) im Bereich (14) herausgearbeitet.

## Patentansprüche

1. Ventilanordnung aus mikrostrukturierten, aus einem Grundkörper (1) herausgearbeiteten Komponenten zur Steuerung von Fluiden, bei welcher ein Betätigungselement (3) relativ zu einem Strömungswegverteiler bewegbar ist und je nach seiner Schaltposition Fluidwege (2, 7) freigibt oder verschließt, wobei durch die Zuschaltung eines an eine Energiequelle angeschlossenen Stellantriebs (9; 11, 12; 13; 16, 17, 18; 103) die Überführung von einer Position in die andere erfolgt, und danach das Betätigungselement (3) in seiner Schaltposition gehalten wird, dadurch gekennzeichnet, daß der Stellantrieb aus einer Auflage (13) aus piezoelektrischem Material auf dem Verschlußkörper (3) besteht, die an eine elektrische Energiequelle anschließbar ist, und daß als Haltevorrichtung ein elektrischer Kondensator vorgesehen ist, der aus einer elektrisch leitfähigen Kondensatorschicht (5) auf dem der Kanalmündung (8) gegenüberliegenden Bereich des Verschlußkörpers (3) einerseits und aus dem aus Silizium bestehenden Grundkörper (1) andererseits gebildet ist.

2. Ventilanordnung aus mikrostrukturierten, aus einem Grundkörper (1) herausgearbeiteten Komponenten zur Steuerung von Fluiden, bei welcher ein Betätigungselement (3) relativ zu einem Strömungswegverteiler bewegbar ist und je nach seiner Schaltposition Fluidwege (2, 7) freigibt oder verschließt, wobei durch die Zuschaltung eines an eine Energiequelle angeschlossenen Stellantriebs (9; 11, 12; 13; 16, 17, 18; 103) die Überführung von einer Position in die andere erfolgt, und danach das Betätigungselement (3) in seiner Schaltposition gehalten wird, dadurch gekennzeichnet, daß als Stellantrieb spiralförmig auf dem Verschlußkörper (3) aufgebrachte, an eine elektrische Energiequelle anschließbare Leiterbahnen (23) vorgesehen sind, welche einem permanenten Magnetfeld mit divergierendem Kraftlinienverlauf (K) ausgesetzt sind, und daß als Haltevorrichtung ein elektrischer Kondensator vorgesehen ist, der aus einer elektrisch leitfähigen Kondensatorschicht (5) auf dem der Kanalmündung (8) gegenüberliegenden Bereich des Verschlußkörpers (3) einerseits und aus dem aus Silizium bestehenden Grundkörper (1) andererseits gebildet ist.

3. Ventilanordnung aus mikrostrukturierten, aus einem Grundkörper (1) herausgearbeiteten Komponenten zur Steuerung von Fluiden, bei welcher ein Betätigungselement (3) relativ zu einem Strömungswegverteiler bewegbar ist und je nach seiner Schaltposition Fluidwege (2, 7) freigibt oder verschließt, wobei durch die Zuschaltung eines an eine Energiequelle angeschlossenen Stellantriebs (9; 11, 12; 13; 16, 17, 18; 103) die Überführung von einer Position in die andere erfolgt, und danach das Betätigungselement (3) in seiner Schaltposition gehalten wird, dadurch gekennzeichnet, daß als Stellantrieb eine Heizvorrichtung (11, 12) vorgesehen ist, die auf einer Fläche einer Membran (3) als Betätigungselement aufgebracht ist, welche zum Verschließen der Kanalmündung (8) mit einem als Membranverdickung ausgebildeten Verschlußkörper (10) ausgestattet ist, wobei die Heizvorrichtung eine erste Heizbahn (11) im Randbereich des Verschlußkörpers (10) verlaufend, und eine zweite Heizbahn (12) im Randbereich der Verbindungsstelle zwischen Membran (3) und Strömungswegverteiler (1) verlaufend besitzt, welche jeweils unabhängig voneinander beheizbar sind.

4. Ventilanordnung aus mikrostrukturierten, aus einem Grundkörper (1) herausgearbeiteten Komponenten zur Steuerung von Fluiden, bei welcher ein Betätigungselement (3) relativ zu einem Strömungswegverteiler bewegbar ist und je nach seiner Schaltposition Fluidwege (2, 7) freigibt oder verschließt, wobei durch die Zuschaltung eines an eine Energiequelle angeschlossenen Stellantriebs (9; 11, 12; 13; 16, 17, 18; 103) die Überführung von einer Position in die andere erfolgt, und danach das Betätigungselement (3) in seiner Schaltposition gehalten wird, dadurch gekennzeichnet, daß der Stellantrieb aus mindestens zwei, über ein Heizelement (9) beheizbaren Schichten (3, 103) mit unterschiedlichen thermischen Ausdehnungskoeffizienten besteht, von denen die eine (103) als Verschlußelement ausgebildet ist, und daß als Haltevorrichtung ein elektrischer Kondensator vorgesehen ist, der aus einer elektrisch leitfähigen Kondensatorschicht (5) auf dem der Kanalmündung (8) gegenüberliegenden Bereich des Verschlußkörper (3) einerseits und aus dem aus Silizium bestehenden Grundkörper (1) andererseits gebildet ist.

5. Ventilanordnung aus mikrostrukturierten, aus einem Grundkörper (1) herausgearbeiteten Komponenten zur Steuerung von Fluiden, bei welcher ein Betätigungselement (3) relativ zu einem Strömungswegverteiler bewegbar ist und je nach seiner Schaltposition Fluidwege (2, 7) freigibt oder verschließt, wobei durch die Zuschaltung eines an eine Energiequelle angeschlossenen Stellantriebs (9; 11, 12; 13; 16, 17, 18; 103) die Überführung von einer Position in die andere erfolgt, und danach das Betätigungselement (3) in seiner Schaltposition gehalten wird, dadurch gekennzeichnet, daß als Betätigungselement ein Schieber (16) mittels eines von einem Antrieb (18) betätigbaren Hebelwerkes (17) in horizontaler Richtung parallel zum Verlauf des Grundkörpers (1) über die Kanalöffnung (8) schwenkbar ist, der aus einem elektrisch leitfähigem Material besteht und mit einem elektrisch leitfähig ausgebildeten Bereich um die Kanalöffnung (8) einen Kondensator bildet, der aus einer elektrisch leitfähigen Kondensatorschicht (20) auf dem Schieber (16) einerseits und aus dem aus Silizium bestehenden Grundkörper (1) andererseits gebildet ist.

6. Ventilanordnung nach einem der Ansprüche 1 bis 5, dadurch gekennzeichnet, daß der Strömungswegverteiler eine aus einem Siliziumgrundkörper (1) geätzte Kanalführung (2, 7) aufweist, von welcher zumindest eine Kanalmündung (8) durch einen als Betätigungselement ausgebildeten Verschlußkörper (3, 10, 16) abdeckbar ist.

7. Ventilanordnung nach Anspruch 6, dadurch gekennzeichnet, daß der Verschlußkörper als allseitig eingespannte, mit Durchbrüchen versehene Membran (3) ausgebildet ist.

8. Ventilanordnung nach Anspruch 6, dadurch gekennzeichnet, daß der Verschlußkörper (3; 16) als einseitig eingespannte Zunge ausgebildet ist.

9. Ventilanordnung nach Anspruch 7 oder 8, dadurch gekennzeichnet, daß der Verschlußkörper (3) an seinem der Kanalmündung (8) gegenüberliegenden Bereich eine Verdickung (10) aufweist.

10. Ventilanordnung nach einem der Ansprüche 1 bis 9, dadurch gekennzeichnet, daß der Verschlußkörper (3) aus Siliziumoxid oder Siliziumnitrid, oder aus einem Gemisch von Siliziumoxid oder Siliziumnitrid besteht.

## Claims

1. Valve arrangement of microstructured components which are worked from a base body (1) for the control of fluids, in which arrangement an operating element (3) can be moved relative to a flow path distributor and according to its switching position frees or closes fluid paths (2, 7), in which case the transfer from one position to the other occurs as a result of the connection of an actuating drive (9; 11, 12; 13; 16, 17, 18; 103) connected to an energy source, and subsequently the operating element (3) is held in its switching position, characterized in that the actuating drive consists of a coating (13) of piezoelectric material on the closing body (3), which coating can be connected to an electrical energy source, and in that provided as holding arrangement there is an electrical capacitor which is formed of an electrically conductive capacitor layer (5) on the area of the closing body (3) lying opposite the channel opening (8), on the one hand, and of the base body (1) consisting of silicon, on the other hand.

2. Valve arrangement of microstructured components which are worked from a base body (1) for the control of fluids, in which arrangement an operating element (3) can be moved relative to a flow path distributor and according to its switching position frees or closes fluid paths (2, 7), in which case the transfer from one position to the other occurs as a result of the connection of an actuating drive (9; 11, 12; 13; 16, 17, 18; 103) connected to an energy source, and subsequently the operating element (3) is held in its switching position, characterised in that provided as the actuating drive there are conductor tracks (23) which are applied to the closing body (3) in a spiral manner, can be connected to an electrical energy source and are exposed to a permanent magnetic field with diverging force line course (K), and in that provided as holding arrangement there is an electrical capacitor which is formed of an electrically conductive capacitor layer (5) on the area of the closing body (3) lying opposite the channel opening (8), on the one hand, and of the base body (1) which consists of silicon, on the other hand.

3. Valve arrangement of microstructured components which are worked from a base body (1) for the control of fluids, in which arrangement an operating element (3) can be moved relative to a flow path distributor and according to its switching position frees or closes fluid paths (2, 7), in which case the transfer from one position to the other occurs as a result of the connection of an actuating drive (9; 11, 12; 13; 16, 17, 18; 103) connected to an energy source, and subsequently the operating element (3) is held in its switching position, characterised in that provided as the actuating drive there is heating arragement (11, 12) which is applied to a surface of a membrane (3) as operating element, which membrane is fitted with a closing body (10) formed as a thickened portion of the membrane for the purpose of closing the channel opening (8), the heating arrangement having a first heating track (11) extending in the edge area of the closing body (10) and a second heating track (12) extending in the edge area of the point of connection between membrane (3) and flow path distributor (1), which tracks, in each case, can be heated independently of each other.

4. Valve arrangement of microstructured components which are worked from a base body (1) for the control of fluids, in which arrangement an operating element (3) can be moved relative to a flow path distributor and according to its switching position frees or closes fluid paths (2, 7), in which case the transfer from one position to the other occurs as a result of the connection of an actuating drive (9; 11, 12; 13; 16, 17, 18; 103) connected to an energy source, and subsequently the operating element (3) is held in its switching position, characterised in that the actuating drive consists of at least two layers (3, 103) which can be heated by way of a heating element (9) with different coefficients of thermal expansion, one of which (103) is formed as a closing element, and in that provided as holding arrangement there is an electrical capacitor which is formed of an electrically conductive capacitor layer (5) on the area of the closing body (3) lying opposite the channel opening (8), on the one hand, and of the base body (1) consisting of silicon, on the other hand.

5. Valve arrangement of microstructured components which are worked from a base body (1) for the control of fluids, in which arrangement an operating element (3) can be moved relative to a flow path distributor and according to its switching position frees or closes fluid paths (2, 7), in which case the transfer from one position to the other occurs as a result of the connection of an actuating drive (9; 11, 12; 13; 16, 17, 18; 103) connected to an energy source, and subsequently the operating element (3) is held in its switching position, characterised in that as an operating element a slide (16) can be swung by means of a lever apparatus (17), which can be operated by a drive (18), over the channel opening (8) in the horizontal direction parallel to the course of the base body (1), consisting of an electrically conductive material and forming a capacitor with an area which is formed in an electrically conductive manner about the channel opening (8), which capacitor is formed of an electrically conductive capacitor layer (20) on the slide (16), on the one hand, and of the base body (1) consisting of silicon, on the other hand.

6. Valve arrangement according to one of the claims 1 to 5, characterised in that the flow path distributor has a channel guide (2, 7) which is etched from a silicon base body (1) and of which at least one channel opening (8) can be covered by means of a closing body (3, 10, 16) formed as an operating element.

7. Valve arrangement according to claim 6, characterised in that the closing body is formed as a membrane (3) which is clamped on all sides and is provided with openings.

8. Valve arrangement according to claim 6, characterised in that the closing body (3; 16) is formed as a tongue which is clamped on one side.

9. Valve arrangement according to claim 7 or 8, characterised in that the closing body (3) has a thickened portion (10) on its area which lies opposits the channels opening (8).

10. Valve arrangement according to one of the claims 1 to 9, characterised in that the closing body (3) consists of silicon oxide or silicon nitride, or of a mixture of silicon oxide or silicon nitride.

## Revendications

1. Dispositif de soupape constitué de composants micro-structurés, ménagés dans un corps de base (1), pour la commande de fluides, dans lequel un élément d'actionnement (3) est déplaçable par rapport à un distributeur d'écoulement et libère ou ferme des voies de fluide (2, 7), suivant sa position de commutation, le passage d'une position à l'autre s'effectuant par la mise en circuit d'un mécanisme de positionnement (9 ; 11, 12 ; 13 ; 16, 17, 18 ; 103) raccordé à une source d'énergie et l'élément d'actionnement (3) étant ensuite maintenu dans sa position de commutation, caractérisé en ce que le mécanisme de positionnement est constitué d'un support (13) en matériau piézo-électrique sur le corps de fermeture (3), support qui peut être raccordé à une source d'énergie électrique et en ce qu'il est prévu comme dispositif de maintien un condensateur électrique qui est formé par une couche de condensateur (5) électriquement conductrice sur la zone du corps de fermeture (3) opposée à l'orifice de canal (8) d'une part et par le corps de base (1), réalisé en silicium, d'autre part.

2. Dispositif de soupape constitué de composants micro-structurés, ménagés dans un corps de base (1), pour la commande de fluides, dans lequel un élément d'actionnement (3) est déplaçable par rapport à un distributeur d'écoulement et libère ou ferme des voies de fluide (2, 7), suivant sa position de commutation, le passage d'une position à l'autre s'effectuant par la mise en circuit d'un mécanisme de positionnement (9 ; 11, 12 ; 13 ; 16, 17, 18 ; 103) raccordé à une source d'énergie et l'élément d'actionnement (3) étant ensuite maintenu dans sa position de commutation, caractérisé en ce qu'il est prévu comme mécanisme de positionnement des rubans conducteurs (23) appliqués en spirale sur le corps de fermeture (3), pouvant être raccordés à une source d'énergie électrique, qui sont soumis à un champ magnétique permanent avec parcours de lignes de force (K)

7

divergeant et en ce qu'il est prévu comme dispositif de maintien un condensateur électrique qui est formé d'une part par une couche de condensateur (5) électriquement conductrice sur la zone opposée à l'orifice de canal (8), du corps de fermeture (3) et d'autre part par le corps de base (1) réalisé en silicium.

3. Dispositif de soupape constitué de composants micro-structurés, ménagés dans un corps de base (1), pour la commande de fluides, dans lequel un élément d'actionnement (3) est déplaçable par rapport à un distributeur d'écoulement et libère ou ferme des voies de fluide (2, 7), suivant sa position de commutation, le passage d'une position à l'autre s'effectuant par la mise en circuit d'un mécanisme de positionnement (9 ; 11, 12 ; 13 ; 16, 17, 18 ; 103) raccordé à une source d'énergie et l'élément d'actionnement (3) étant ensuite maintenu dans sa position de commutation, caractérisé en ce qu'il est prévu comme mécanisme de positionnement un dispositif de chauffage (11, 12) qui est appliqué comme élément d'actionnement sur une surface d'une membrane (3) qui est équipée, pour fermer l'orifice de canal (8), avec un corps de fermeture (10) configuré en surépaisseur de membrane, le dispositif de chauffage possédant une première bande de chauffage (11) s'étendant dans la zone de bordure du corps de fermeture (10) et une deuxième bande de chauffage (12) s'étendant dans la zone de bordure du point de liaison entre la membrane (3) et le distributeur d'écoulement (1), lesquelles peuvent être chauffées indépendamment l'une de l'autre.

4. Dispositif de soupape constitué de composants micro-structurés, ménagés dans un corps de base (1), pour la commande de fluides, dans lequel un élément d'actionnement (3) est déplaçable par rapport à un distributeur d'écoulement et libère ou ferme des voies de fluide (2, 7), suivant sa position de commutation, le passage d'une position à l'autre s'effectuant par la mise en circuit d'un mécanisme de positionnement (9 ; 11, 12 ; 13 ; 16, 17, 18 ; 103) raccordé à une source d'énergie et l'élément d'actionnement (3) étant ensuite maintenu dans sa position de commutation, caractérisé en ce que le mécanisme de positionnement est constitué d'au moins deux couches (3, 103), chauffées par un élément de chauffage (9), possédant des coefficients de dilatation thermique différents, dont une (103) est configurée en élément de fermeture et en ce qu'il est prévu comme dispositif de maintien, un condensateur électrique qui est formé d'une part par une couche de condensateur (5) électriquement conductrice sur la zone du corps de fermeture (3), opposée à l'orifice de canal (8) et d'autre part par le corps de base (1) réalisé en silicium.

5. Dispositif de soupape constitué de composants micro-structurés, ménagés dans un corps de base (1), pour la commande de fluides, dans lequel un élément d'actionnement (3) est déplaçable par rapport à un distributeur d'écoulement et libère ou ferme des voies de fluide (2, 7), suivant sa position de commutation, le passage d'une position à l'autre s'effectuant par la mise en circuit d'un mécanisme de positionnement (9 ; 11, 12 ; 13 ; 16, 17, 18 ; 103) raccordé à une source d'énergie et l'élément d'actionnement (3) étant ensuite maintenu dans sa position de commutation, caractérisé en ce qu'il est prévu comme élément d'actionnement un obturateur (16) qui peut pivoter au moyen d'un mécanisme à leviers (17) actionné par un mécanisme d'entraînement (18), dans une direction horizontale, parallèlement au parcours du corps de base (1), sur l'orifice de canal (8), lequel obturateur est réalisé dans un matériau électriquement conducteur et forme, avec une zone électriquement conductrice autour de l'orifice de canal (8), un condensateur qui est formé d'une part par une couche de condensateur (20) électriquement conductrice sur l'obturateur (16) et d'autre part, par le corps de base (1) réalisé en silicium.

6. Dispositif de soupape selon l'une des revendications 1 à 5, caractérisé en ce que le distributeur d'écoulement présente un tracé de canal (2, 7) gravé dans un corps de base en silicium (1), dont un orifice de canal (8) au moins peut être recouvert par un corps de fermeture (3, 10, 16) configuré en élément d'actionnement.

7. Dispositif de soupape selon la revendication 6, caractérisé en ce que le corps de fermeture est une membrane (3) serrée de tous côtés, pourvue d'ajours.

8. Dispositif de soupape selon la revendication 6, caractérisé en ce que le corps de fermeture (3 ; 16) est une languette serrée d'un côté.

9. Dispositif de soupape selon la revendication 7 ou 8, caractérisé en ce que le corps de fermeture (3) présente une surépaisseur (10) dans sa zone opposée à l'orifice de canal (8).

10. Dispositif de soupape selon l'une des revendications 1 à 9, caractérisé en ce que le corps de fermeture (3) est en oxyde de silicium ou en nitrure de silicium, ou réalisé dans un mélange d'oxyde de silicium ou de nitrure de silicium.

Fig. 1

Fig. 2

Fig. 3

Fig. 4

Fig. 5